# EUROPEAN PATENT APPLICATION

(11) **EP 2 618 250 A2**
(43) Date of publication of application: **24.07.2013**
(21) Application number: 13151876.3
(22) Date of filing: 18.01.2013
(51) Int. Cl.: G06F 3/0488, G06F 3/023, G06F 3/0481, G06F 3/0486

(54) **Apparatus and method for providing a clipboard function in a mobile terminal**

(30) Priority: 19.01.2012 KR 20120006337
(71) Applicant: Samsung Electronics Co., Ltd, Gyeonggi-do 443-742 (KR)
(72) Inventor: Park, Doo-Yong, 443-742 Gyeonggi-do (KR); Kim, Sang-Heon, 443-742 Gyeonggi-do (KR)
(74) Representative: Nederlandsch Octrooibureau

(57) **Abstract**

An apparatus and method for providing a clipboard in a mobile terminal includes, upon execution of an application, the mobile terminal activates a smart clipboard including at least one of a word and an image if it is determined that a text input window is displayed, and outputs a symbol indicating the activation of the smart clipboard, and words and images saved during operation are cumulatively stored in the smart clipboard.

## Description

### BACKGROUND OF THE INVENTION

### Field of the Invention

The present invention relates generally to a mobile terminal, and more particularly, to an apparatus and method for providing a clipboard function in a mobile terminal.

### Description of the Related Art

In general, mobile terminals support the clipboard feature which allows users to copy and/or paste their desired notes in words or phrases.

When the mobile terminals store different words or phrases using the clipboard feature, the words or phrases that are previously stored are deleted which in turn makes it inconvenient to the users.

### SUMMARY OF THE INVENTION

An aspect of an exemplary embodiment of the present invention is to provide a clipboard function in a mobile terminal to overcome the above-identified problems and provides additional advantages, by enhancing the convenience of a smart clipboard where a plurality of words or images is stored cumulatively in sequence for later review.

Another aspect of an exemplary embodiment of the present invention is to provide a clipboard function in a mobile terminal which enhances the convenience of a smart clipboard by displaying the words or images that have already been prestored in the previous clipboard sessions.

Further another aspect of an exemplary embodiment of the present invention is to provide a clipboard function in a mobile terminal which increases the convenience of a smart clipboard by automatically activating the smart clipboard upon display of a conventional text input window.

Further another aspect of an exemplary embodiment of the present invention is to provide a clipboard function in a mobile terminal which further increases the convenience of a smart clipboard by automatically displaying a smart clipboard window upon display of a key pad screen on a display.

In accordance with one aspect of the present invention, an apparatus for providing a clipboard function in a mobile terminal includes a display; and a controller for, upon execution of an application, and activating a smart clipboard if it is determined that a text input window is displayed. In all embodiments, the apparatus for providing a clipboard function can be a sub-module of a mobile terminal, or it can form the mobile terminal itself.

In accordance with another aspect of the present invention, an apparatus for providing a clipboard function in a mobile terminal includes a display; and a controller for, upon a user's request for copying any one of an image and a word, storing the requested image or word in a smart clipboard including at least one of pre-stored word and image.

In accordance with further another one aspect of the present invention, an apparatus for providing a clipboard function in a mobile terminal includes a display; and a controller for, upon a user's request for copying at least one of an image and a word, displaying a smart clipboard including at least one of pre-stored word and image, and storing the requested image or word in the displayed smart clipboard.

In accordance with yet another one aspect of the present invention, an apparatus for providing a clipboard function in a mobile terminal includes a display; and a controller for displaying a smart clipboard including at least one of pre-stored word and image if an indication indicating activation of a smart clipboard is selected by a user, and upon a user's request for copying any one of an image and a word, storing the requested image or word in the displayed smart clipboard.

In accordance with still another one aspect of the present invention, a method for providing a clipboard function in a mobile terminal includes, upon execution of an application, and activating a smart clipboard if it is determined that a text input window is displayed.

In accordance with still another one aspect of the present invention, a method for providing a clipboard function in a mobile terminal. The method includes, upon a user's request for copying any one of an image and a word, storing the requested image or word in a smart clipboard including at least one of pre-stored word and image.

In accordance with still another one aspect of the present invention, a method for providing a clipboard function in a mobile terminal includes, upon a user's request for copying any one of an image and a word, displaying a smart clipboard including at least one of pre-stored word and image; and storing the requested image or word in the displayed smart clipboard.

In accordance with still another one aspect of the present invention, a method for providing a clipboard function in a mobile terminal includes displaying a smart clipboard including at least one of pre-stored word and image if an indication indicating activation of a smart clipboard is selected by a user; and upon a user's request for copying any one of an image and a word, storing the requested image or word in the displayed smart clipboard.

The term clipboard as used in this application indicates a (typically software-implemented) clipboard function or "virtual" clipboard. Such a clipboard function can receive, store, and provide multimedia items, such as pieces of text, graphics, images, sound clips, etc. When an multimedia item is stored in the memory allocated to the clipboard function, said item is sometimes said to be "copied to the clipboard" or "stored on the clipboard". When a multimedia item that has been stored in the memory allocated to the clipboard is copied to a memory belonging to a user interface widget, the item is sometimes said to be "copied from the clipboard" or "pasted [from the clipboard]". Storing of a multimedia item can mean that the entire data of the item is copied or stored, or that only a reference to another location where the data of the item is available is copied or stored. Standard clipboards are configured for storing a single item. When another item is copied to a standard clipboard, the item previously stored on the clipboard is overwritten and thus lost.

In all embodiments of the invention, a clipboard may be used that is configured to store one or a plurality of multimedia items. A clipboard that is configured to store a plurality of multimedia items may support a maximum number or an effectively unlimited number, limited only by available memory, of items. Such a clipboard advantageously allows a new item to be copied to it without overwriting the previous item, so that both items are available for pasting.

With the term "activating the (smart) clipboard" is meant that the clipboard functionality is made available to the user. This does not necessarily imply that the current contents of the clipboard is graphically shown to the user. It may also mean that a user interface item, such as an arrow, an icon, a widget, etc, is presented which the user may use or manipulate to bring up a graphical view of the clipboard. It may also mean that certain input actions are enabled. For example the user may bring up a graphical view of an activated clipboard through a pre-determined touch panel gesture.

The term "smart clipboard" is used to indicate a clipboard according the invention. However, the adjective "smart" is not always used. The term "clipboard" also indicates a clipboard according the invention, unless the text states specifically otherwise.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIG. 1 is a block diagram of a mobile terminal according to an exemplary embodiment of the present invention;
FIG. 2 shows a process of providing a clipboard in a mobile terminal according to a first embodiment of the present invention;
FIG. 3 shows a process of providing a clipboard in a mobile terminal according to a second embodiment of the present invention;
FIG. 4 shows screens for providing a clipboard according to a first embodiment of the present invention; and
FIG. 5 shows screens for providing a clipboard according to a second embodiment of the present invention.

Throughout the drawings, the same drawing reference numerals will be understood to refer to the same elements, features and structures.

Further embodiments of the invention are disclosed in the attached claims.

### DETAILED DESCRIPTION OF EXEMPLARY EMBODIMENTS

Reference will now be made to exemplary embodiment of the present invention with reference to the accompanying drawings. For the purposes of clarity and simplicity, a detailed description of known functions and configurations incorporated herein will be omitted as it may obscure the subject matter of the present invention.

A mobile terminal according to an embodiment of the present invention may include a portable electronic devices and any duplex systems which may include video phones, mobile phones, smart phones, International Mobile Telecommunication 2000 (IMT-2000) terminals, Wideband Code Division Multiple Access (WCDMA) terminals, Universal Mobile Telecommunication Service (UMTS) terminals, Personal Digital Assistants (PDAs), Portable Multimedia Players (PMPs), Digital Multimedia Broadcasting (DMB) terminals, E-books, portable computers (e.g., notebook computers, tablet computers, etc.), and digital cameras.

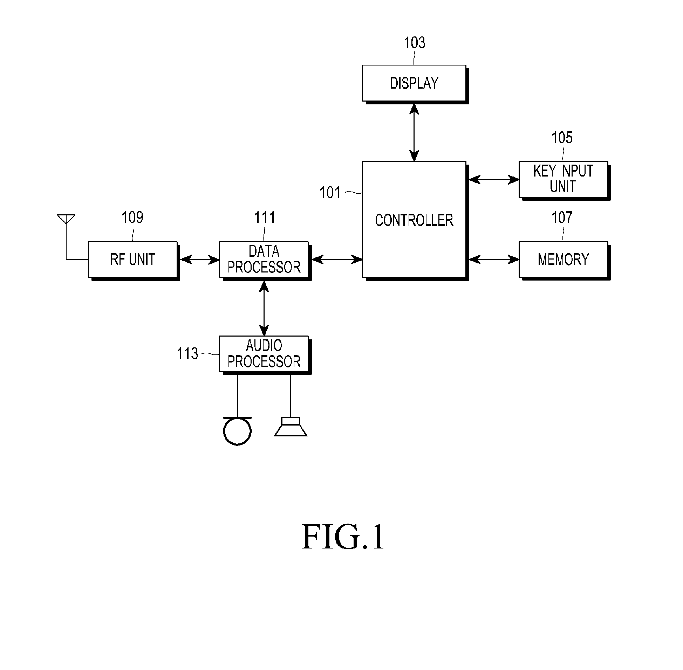

FIG. 1 is a block diagram of a mobile terminal according to an exemplary embodiment of the present invention.

Referring to FIG. 1, a mobile terminal includes a controller 101, a display 103, a key input unit 105, a memory 107, a Radio Frequency (RF) unit 109, a data processor 111, and an audio processor 113.

In operation, the RF unit 109 is responsible for wireless communication of the mobile terminal. To this end, the RF unit 109 includes wireless transmitter for up-converting a frequency of transmission signals and amplifying the up-converted signals, and a wireless receiver for low-noise-amplifying received signals and down-converting a frequency of the amplified received signals. The data processor 111 includes a transmitter for coding and modulating transmission signals, and a receiver for demodulating and decoding received signals. The data processor 111 may further include a modulator/demodulator (modem) and a coder/decoder (codec). The codec may include a data codec for processing data signals such as packet data, and an audio codec for processing audio signals such as voice.

The audio processor 113 plays received audio signals output from the data processor 111 using a speaker, and transfers transmission audio signals picked up by a microphone to the data processor 111. The key input unit 105 includes alphanumeric keys for inputting alphanumeric information and function keys for setting various functions. The display 103 displays image signals on a screen, and displays requested data output from the controller 101.

If the display 103 is implemented to have a capacitive or resistive touch screen, the key input unit 105 may include a number of preset keys. The display 103 may replace part of the key input function of the key input unit 105 if implemented with touch screen.

The memory 107 includes a program memory and a data memory. The program memory stores booting programs and an Operating System (OS) for controlling the overall operation of the mobile terminal, and the data memory stores various data generated during operation of the mobile terminal.

The controller 101 controls the overall operation of the mobile terminal. In particular, the controller 101 provides a smart clipboard via a display and storing words and images thereon and further cumulatively store the copied words and images in the smart clipboard over time.

More specifically, the controller 101 executes a first method of providing a clipboard function when a text input window is output on the display 103, and a second method of providing a clipboard function when a keypad is output on the display 103. The term 'text input window' as used herein may refer to a window in which a user may input texts.

Hereinafter, the first method will be described in more detail. The controller 101 executes or runs a specific application among a plurality of applications selected by a mobile terminal user. The controller 101 determines which window is output on the display 103 by analyzing screen data that is output on the display 103 in response to the execution of the specific application.

If it is determined that a text input window is displayed, the controller 101 automatically activates a smart clipboard and indicates that the smart clipboard is activated on the display 103. An indication indicating the activation of the smart clipboard may be a symbol, an icon, a widget, etc. For example, the controller 101 may display an arrow on the right side of the display 103 to indicate the activation of the smart clipboard.

Thereafter, the controller 101 detects a user's touch motion on the display 103, and determines whether the detected user's touch motion corresponds to a smart clipboard open request. For example, while an arrow indicating activation of a smart clipboard is output on the display 103, a touch motion representing a smart clipboard open request may be a motion of clicking an area where the arrow is displayed on the display 103.

If the user's touch motion corresponds to a smart clipboard open request, the controller 101 outputs, on the display 103, a smart clipboard window including words or images that are stored in advance in the smart clipboard. Here, the controller 101 may output a smart clipboard window that occupies a specific area on the right or left side (or top or bottom side) of the display 103.

In contrast, if the user's touch motion does not correspond to a smart clipboard open request, the controller 101 executes a function of the mobile terminal that corresponds to the user's touch motion. For example, if the executed application is a search engine application for executing Internet search, the related function of the mobile terminal activated may be a search function for web pages associated with the words which are input in the text input window.

The controller 101 detects a user's touch motion on the display 103, and determines whether the detected user's touch motion corresponds to a request for copying any one of the words included in the smart clipboard in the text input window. For example, a user's touch motion representing a word copy request may be a motion of selecting any one of the words included in a smart clipboard window and dragging the selected word to the text input window.

If the user's touch motion corresponds to a word copy request, the controller 101 displays related words in the text input window. For example, if words `foot-and-mouth disease (FMD)', 'Andong' and 'Southwestern Region' are included in a smart clipboard window and the word 'FMD' among the words is requested to be copied in the text input window, the controller 101 may display the word 'FMD' in the text input window according to the user's copy gesture.

In contrast, if the user's touch motion does not correspond to a word copy request, the controller 101 determines whether the user's touch motion corresponds to a request for storing a word in a smart clipboard. For example, a user's touch motion representing a word storage request may be a motion of dragging a word selected by the user to a smart clipboard window.

If the user's touch motion corresponds to a word storage request, the controller 101 stores the related word in the smart clipboard along with the previous stored words or images and outputs the stored word in the smart clipboard window. For example, if a word 'FMD' is requested by the user to be stored in a smart clipboard, the controller 101 may store the word 'FMD' in the smart clipboard and display the word 'FMD' in a smart clipboard window.

In contrast, if the user's touch motion does not correspond to a word storage request, the controller 101 determines whether the user's touch motion corresponds to a smart clipboard close request. For example, a user's touch motion representing a smart clipboard close request may be a motion of double-clicking a smart clipboard window.

If the user's touch motion corresponds to a smart clipboard close request, the controller 101 closes the smart clipboard window output on the display 103 and inactivates the smart clipboard. In contrast, if the user's touch motion does not correspond to a smart clipboard close request, the controller 101 executes a related function of the mobile terminal that corresponds to the user's touch motion. For example, if the executed application is a search engine application for executing Internet search, the related function of the mobile terminal may be a search function for web pages associated with the words which are input in the text input window.

Hereinafter, the second method will be described in more detail. The controller 101 executes or runs a specific application if the specific application is selected by the user from among a plurality of applications provided by the mobile terminal. The controller 101 determines which window is displayed on the display 103 by analyzing screen data that is output on the display 103 by the execution of the specific application.

If it is determined that a keypad is displayed, the controller 101 automatically activates a smart clipboard and outputs, on the display 103, a smart clipboard window including words or images that are stored in advance or previously in the smart clipboard. The controller 101 may output a smart clipboard window that occupies a specific area on the right or left side (or top or bottom) side of the display 103. That is, in the present invention, the controller 101 may output the keypad and the text input window together, instead of outputting only the keypad.

The controller 101 detects a user's touch motion on the display 103, and determines whether the detected user's touch motion corresponds to a request for copying any one of the words included in a smart clipboard window in the text input window. For example, a user's touch motion representing a word copy request may be a motion of selecting any one of the words included in a smart clipboard window and dragging the selected word to the text input window.

If the user's touch motion corresponds to a word copy request, the controller 101 displays related words in the text input window. For example, if words 'FMD', 'Andong' and 'Southwestern Region' are included in a smart clipboard window and the word 'FMD' among the words is requested to be copied in a text input window, the controller 101 may display the word 'FMD' in the text input window.

In contrast, if the user's touch motion does not correspond to a word copy request, the controller 101 determines whether the user's touch motion corresponds to a request for storing a word in a smart clipboard. For example, a user's touch motion representing a word storage request may be a motion of dragging a word selected by the user from among the words displayed on the display 103, to a smart clipboard window.

If the user's touch motion corresponds to a word storage request, the controller 101 stores the related word in the smart clipboard along with the previous words or images and outputs the stored word in the smart clipboard window. For example, if a word 'FMD' is requested by the user to be stored in a smart clipboard, the controller 101 may store the word 'FMD' in the smart clipboard and display the word 'FMD' in a smart clipboard window.

In contrast, if the user's touch motion does not correspond to a word storage request, the controller 101 determines whether the user's touch motion corresponds to a smart clipboard close request. For example, a user's touch motion representing a smart clipboard close request may be a motion of double-clicking a smart clipboard window.

If the user's touch motion corresponds to a smart clipboard close request, the controller 101 closes the smart clipboard window output on the display 103 and inactivates the smart clipboard. In contrast, if the user's touch motion does not correspond to a smart clipboard close request, the controller 101 executes a related function of the mobile terminal, which corresponds to the user's touch motion.

For example, if a user's touch motion is a motion of touching any one of the keys displayed on a keypad, the controller 101 may display a character corresponding to the touched key, in the text input window. As another example, if the executed application is a message composition application and a user's touch motion corresponds to a message transfer request, the controller 101 may generate and send a message including all characters which are output in the text input window.

In the first and second methods, if a word or an image is requested to be stored by a user after a smart clipboard window is displayed, the controller 101 stores the requested word or image in the smart clipboard. However, the controller 101 may store the word or image in a different way. More specifically, if a word or an image is requested to be stored by a user before a smart clipboard window is displayed, the controller 101 may display a smart clipboard and store the requested word or image in the displayed smart clipboard.

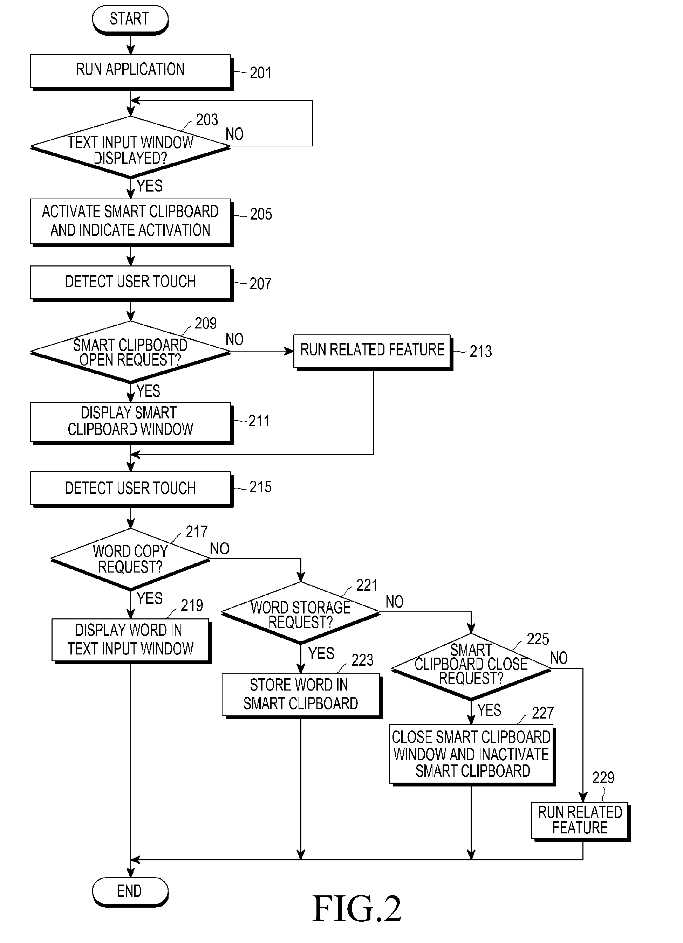

FIG. 2 shows a process of providing a clipboard in a mobile terminal according to a first embodiment of the present invention.

Referring to FIG. 2, in step 201, the mobile terminal executes or runs a specific application if the specific application is selected by a user from among a plurality of applications provided by the mobile terminal.

Thereafter, in step 203, the mobile terminal determines whether a text input window is displayed, by analyzing screen data that is output by the execution of the specific application. If a text input window is displayed, the mobile terminal proceeds to step 205. Otherwise, the mobile terminal repeats step 203.

In step 205, the mobile terminal activates a smart clipboard, and indicates the activation of the smart clipboard. For example, the mobile terminal may display an arrow on the right side of the display 103 to indicate the activation of the smart clipboard.

In step 207, the mobile terminal detects a user's touch motion. In step 209, the mobile terminal determines whether the user's touch motion corresponds to a smart clipboard open request. For example, while an arrow indicating activation of a smart clipboard is output on the display 103, a touch motion representing a smart clipboard open request may be a motion of clicking an area where the arrow is displayed on the display 103.

If the user's touch motion corresponds to a smart clipboard open request, the mobile terminal proceeds to step 211. Otherwise, the mobile terminal proceeds to step 213.

In step 211, the mobile terminal outputs, on the display 103, a smart clipboard window including words or images which are stored in advance in the smart clipboard. The mobile terminal may output a smart clipboard window that occupies a specific area on the right or left side of the display 103.

In step 213, the mobile terminal executes its related function corresponding to the user's touch motion. For example, if the executed application is a search engine application for executing Internet search, the related function of the mobile terminal may be a search function for web pages associated with the words which are input in the text input window.

In step 215, the mobile terminal detects a user's touch motion. Thereafter, in step 217, the mobile terminal determines whether the user's touch motion corresponds to a request for copying any one of the words included in a smart clipboard window, in the text input window. For example, a user's touch motion representing a word copy request may be a motion of selecting any one of the words included in a smart clipboard window and dragging the selected word to a text input window.

If the user's touch motion corresponds to a word copy request, the mobile terminal proceeds to step 219. Otherwise, the mobile terminal proceeds to step 221.

In step 219, the mobile terminal displays the requested word in the text input window. For example, if words 'FMD', 'Andong' and 'Southwestern Region' are included in a smart clipboard window and the word 'FMD' among the words is requested to be copied in a text input window, the mobile terminal may display the word 'FMD' in the text input window.

In step 221, the mobile terminal determines whether the user's touch motion corresponds to a request for storing a word in the smart clipboard. For example, a user's touch motion representing a word storage request may be a motion of dragging a word selected by the user to a smart clipboard window.

If the user's touch motion corresponds to a word storage request, the mobile terminal proceeds to step 223. Otherwise, the mobile terminal proceeds to step 225.

In step 223, the mobile terminal stores the requested word in the smart clipboard, and displays the stored word in the smart clipboard window. For example, if a word 'FMD' is requested by the user to be stored in a smart clipboard, the mobile terminal may store the word 'FMD' in the smart clipboard and display the word 'FMD' in a smart clipboard window.

In step 225, the mobile terminal determines whether the user's touch motion corresponds to a smart clipboard close request. For example, a user's touch motion representing a smart clipboard close request may be a motion of double-clicking a smart clipboard window.

If the user's touch motion corresponds to a smart clipboard close request, the mobile terminal proceeds to step 227. Otherwise, the mobile terminal proceeds to step 229.

In step 227, the mobile terminal closes the smart clipboard window, and inactivates the smart clipboard. In step 229, the mobile terminal executes its related function corresponding to the user's touch motion. For example, if the executed application is a search engine application for executing Internet search, the related function of the mobile terminal may be a search function for web pages associated with the words which are input in the text input window.

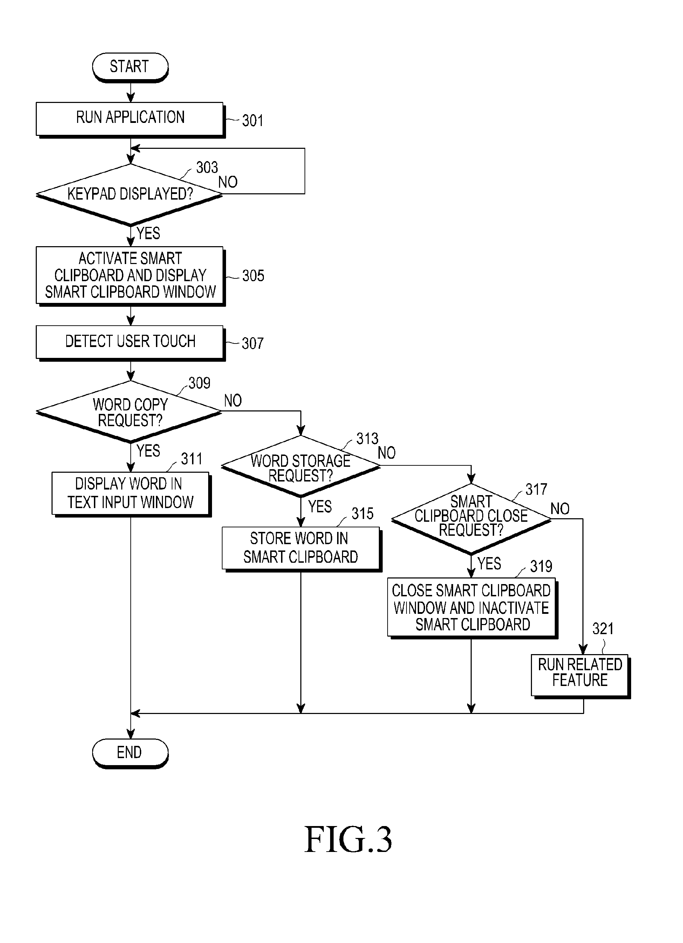

FIG. 3 shows a process of providing a clipboard in a mobile terminal according to a second embodiment of the present invention.

Referring to FIG. 3, in step 301, the mobile terminal executes or runs a specific application if the specific application is selected by a user from among a plurality of applications provided by the mobile terminal.

In step 303, the mobile terminal determines whether a keypad is displayed on the display 103, by analyzing screen data, which is output by the execution of the specific application.

If a keypad is displayed, the mobile terminal proceeds to step 305. Otherwise, the mobile terminal repeats step 303. The mobile terminal may output the keypad and the text input window together, instead of outputting only the keypad.

In step 305, the mobile terminal activates a smart clipboard, and outputs, on the display 103, a smart clipboard window including words or images which are stored in advance in the smart clipboard. The mobile terminal may output a smart clipboard window that occupies a specific area on the right or left side of the display 103.

In step 307, the mobile terminal detects a user's touch motion on the display 103. Thereafter, in step 309, the mobile terminal determines whether the detected user's touch motion corresponds to a request for copying any one of the words included in a smart clipboard window, in the text input window. For example, a user's touch motion representing a word copy request may be a motion of selecting any one of the words included in a smart clipboard window and dragging the selected word to a text input window.

If the user's touch motion corresponds to a word copy request, the mobile terminal proceeds to step 311. Otherwise, the mobile terminal proceeds to step 313.

In step 311, the mobile terminal displays the requested word in the text input window. For example, if words 'FMD', 'Andong' and 'Southwestern Region' are included in a smart clipboard window and the word 'FMD' among the words is requested to be copied in a text input window, the mobile terminal may display the word 'FMD' in the text input window.

In step 313, the mobile terminal determines whether the user's touch motion corresponds to a request for storing a word in the smart clipboard. For example, a user's touch motion representing a word storage request may be a motion of dragging a word selected by the user from among the words displayed on the display 103, to a smart clipboard window.

If the user's touch motion corresponds to a word storage request, the mobile terminal proceeds to step 315. Otherwise, the mobile terminal proceeds to step 317.

In step 315, the mobile terminal stores the word selected by the user in the smart clipboard, and outputs the stored word in the smart clipboard window. For example, if a word 'FMD' is requested by the user to be stored in a smart clipboard, the mobile terminal may store the word 'FMD' in the smart clipboard and display the word 'FMD' in a smart clipboard window.

In step 317, the mobile terminal determines whether the user's touch motion corresponds to a smart clipboard close request. For example, a user's touch motion representing a smart clipboard close request may be a motion of double-clicking a smart clipboard window.

If the user's touch motion corresponds to a smart clipboard close request, the mobile terminal proceeds to step 319. Otherwise, the mobile terminal proceeds to step 321.

In step 319, the mobile terminal closes the smart clipboard window output on the display 103 and inactivates the smart clipboard. In contrast, in step 321, the mobile terminal executes its related function corresponding to the user's touch motion.

For example, if a user's touch motion is to a motion of touching any one of the keys displayed on the keypad, the mobile terminal may display a character corresponding to the touched key, in the text input window. As another example, if the executed application is a message composition application and a user's touch motion corresponds to a message transfer request, the mobile terminal may generate and send a message including all characters which are output in the text input window.

FIGs. 2 and 3 show the processes in which if a word or an image is requested by a user to be copied after a smart clipboard window is displayed, the mobile terminal stores the requested word or image in a smart clipboard. However, the mobile terminal may store the word or image in a different way. More specifically, if a word or an image is requested by the user to be copied before a smart clipboard window is displayed, the mobile terminal may display a smart clipboard and store the requested image or word in the displayed smart clipboard.

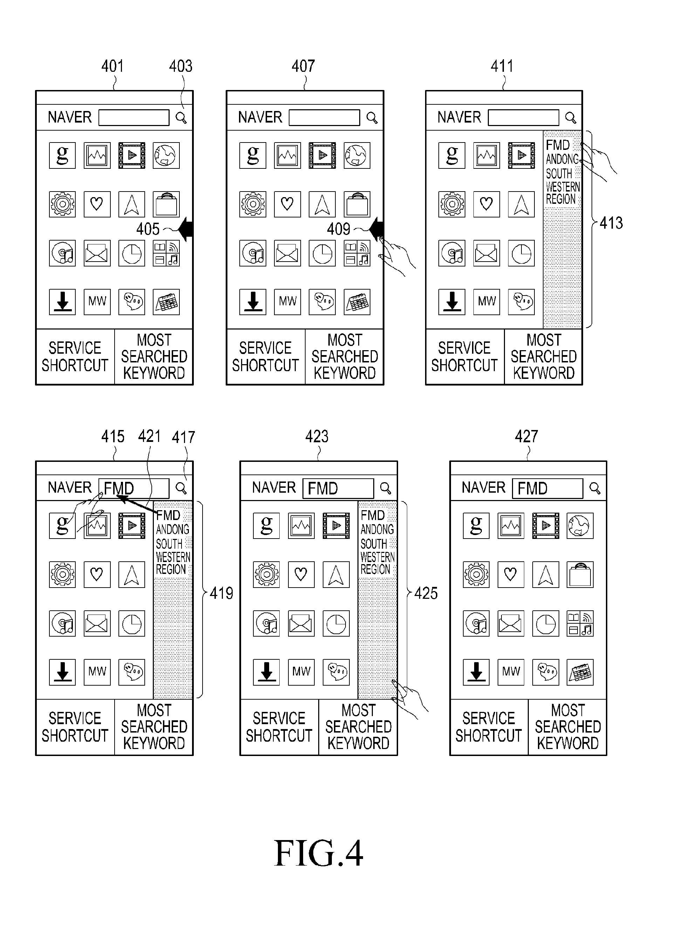

FIG. 4 shows screens for providing a clipboard according to a first embodiment of the present invention.

Referring to FIG. 4, reference numeral 401 represents a screen indicating activation of a smart clipboard, reference numeral 407 represents a screen on which a smart clipboard open request is executed upon request of a user, and reference numeral 411 represents a screen on which a smart clipboard window is displayed. Reference numeral 415 represents a screen on which a word copy request is executed upon request of the user, reference numeral 423 represents a screen on which a smart clipboard close request is executed upon request of the user, and reference numeral 427 represents a screen on which the smart clipboard window is terminated.

In operation, while an Internet search engine application (e.g., Naver® application) is executed, the mobile terminal determines whether a text input window 403 is output by analyzing screen data that is output on the display 103. If it is determined that the text input window 403 is output, the mobile terminal displays the screen 401 that includes the text input window 403 and a clipboard activation indicating arrow 405. If a clipboard activation indicating arrow 409 is touched by the user, the mobile terminal displays a smart clipboard window 413 including pre-stored words. With pre-stored words is meant multimedia items in the form of text items that are currently stored on the clipboard, for example because they have been copied there by the user from another application. It should be noted that the location and placement of the arrow and the smart clipboard shown in FIG. 4 is for illustrative purposes, thus should not limit the scope of the invention. Other locations within the display can be used to display the arrow and the corresponding smart clipboard. Further, the teachings of the present invention can be applicable when more than one arrows and smart clipboards are implemented in the mobile terminal.

If a word 'FMD' is dragged by the user to a text input window from a smart clipboard window 419 including words 'FMD', 'Andong' and 'Southwestern Region', as shown by reference numeral 421, then the mobile terminal displays the word 'FMD' in the text input window 417, as shown by reference numeral 423, after determining that the word 'FMD' is requested to be copied. Thereafter, if a smart clipboard window 425 is doubled-clicked by the user, the mobile terminal displays the screen 427 on which the smart clipboard window is terminated, determining that a smart clipboard close request is received.

In this way, the mobile terminal may automatically activate a smart clipboard, thereby increasing the convenience of the smart clipboard.

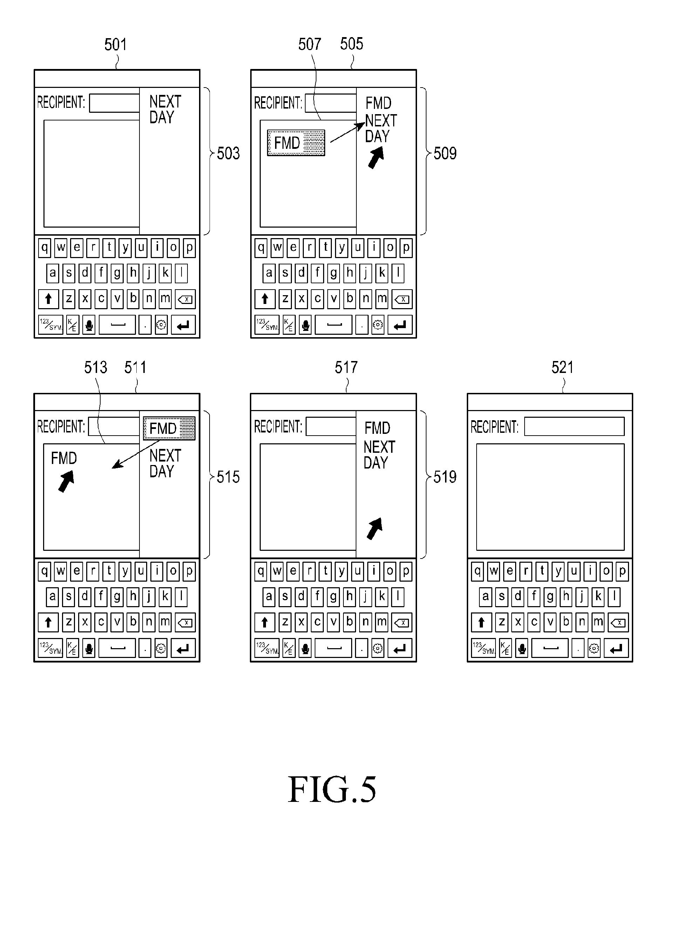

FIG. 5 shows screens for providing a clipboard according to a second embodiment of the present invention.

Referring to FIG. 5, reference numeral 501 represents a screen on which a smart clipboard is output, reference numeral 505 represents a screen on which a word is stored in a smart clipboard window, and reference numeral 511 represents a screen on which a word is copied in a text input window. Reference numeral 517 represents a screen on which a smart clipboard close request is executed, and reference numeral 521 represents a screen on which the smart clipboard window is terminated.

If a message composition application is executed, the mobile terminal determines whether a keypad is output by analyzing screen data that is output on the display 103. If it is determined that the keypad is output, the mobile terminal displays a smart clipboard window 503 including pre-stored words or images.

It should be noted that the location and placement of the arrow and the smart clipboard shown in FIG. 5 is for illustrative purposes, thus should not limit the scope of the invention. Other locations within the display can be used to display the arrow and the corresponding smart clipboard. Further, the teachings of the present invention can be applicable when more than one arrows and smart clipboards are implemented in the mobile terminal.

If a word 'FMD' displayed in a text input window 507 is entered and then dragged by the user to a smart clipboard window 509, the mobile terminal displays the word 'FMD' in the smart clipboard window 509, determining that the word 'FMD' is requested to be stored.

If a word 'FMD' among the words 'FMD' and 'Next Day' included in a smart clipboard window 515 is dragged to a text input window 513 by the user, the mobile terminal displays the word 'FMD' in the text input window 513, determining that the word 'FMD' is requested to be copied.

Thereafter, if a smart clipboard window 519 is double-clicked by the user, the mobile terminal displays the screen 521 on which the smart clipboard window is terminated.

In this way, the mobile terminal may automatically display a smart clipboard window according to the second embodiment, thereby increasing the convenience of the smart clipboard.

As is apparent from the foregoing description, the present invention may increase the convenience of a smart clipboard by sequentially storing a plurality of words or images.

In addition, the present invention may increase the convenience of a smart clipboard by displaying the words or images that have already been designated.

Furthermore, the present invention may increase the convenience of a smart clipboard by automatically activating a smart clipboard. Moreover, the present invention may increase the convenience of a smart clipboard by automatically displaying a smart clipboard window.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An apparatus for providing a smart clipboard in a mobile terminal, comprising:
a display(103); and
a controller (101) adapted for, upon execution of an application, activating a smart clipboard when it is determined that a text input window (403, 417, 507, 513) is displayed.

2. The apparatus of claim 1, wherein the smart clipboard is configured to store at least one of a word and an image.

3. The apparatus of claim 1 or 2, wherein the controller (101) is adapted to, if the smart clipboard is activated, output an indication (405, 409) indicating the activation of the smart clipboard on the display(103),
wherein the indication (405, 409) is at least one of a symbol, an icon, and a widget.

4. The apparatus of any of the previous claims, wherein upon receiving a request for opening the smart clipboard, the controller outputs the smart clipboard including at least one of a word and an image, the at least one of a word and an image having been previously stored in the clipboard, in a specific area of the screen.

5. The apparatus of any of the previous claims, wherein the controller (101) is adapted to, when it is determined that a keypad is displayed, output the smart clipboard including at least one of a word and an image, the at least one of a word and an image having been previously stored in the clipboard, in a specific area of the screen.

6. The apparatus of claim 4 or 5, wherein the controller (101) is adapted to, when at least one of the word and image is selected, display the selected word or image in the text input window (403, 417, 507, 513).

7. The apparatus according to any of the previous claims, wherein the clipboard is configured to simultaneously store a plurality of words and/or images.

8. A method for providing a smart clipboard in a mobile terminal, comprising:
upon execution (201) of an application, analyzing screen data for the executed application; and
activating a smart clipboard (205) when it is determined (203) that a text input window (403, 417, 507, 513) is displayed.

9. The method of claim 8, wherein the smart clipboard stores at least one of a word and an image.

10. The method of claim 8 or 9, further comprising, outputting (205) an indication indicating activation of the smart clipboard, on a display, wherein the indication is at least one of a symbol, an icon, and a widget.

11. The method of any of the claims 8-10, further comprising, upon receiving a request (209) for opening the smart clipboard, outputting (211) the smart clipboard including at least one of pre-stored word and image.

12. The method of any of the claims 8-11, further comprising:
activating (305) the smart clipboard when it is determined (303) that a keypad is displayed; and
outputting the smart clipboard including at least one of pre-stored word and image in a specific area of the screen.

13. The method of any of the claims 8-12, further comprising displaying (311) a selected word or image in the text input window (403, 417, 507, 513) when at least one of the stored word or image is selected.

14. The method of any of the claims 8-13, wherein the clipboard is configured to simultaneously store a plurality of words and/or images.
